# EUROPÄISCHE PATENTANMELDUNG

(11) **EP 0 882 683 A2**
(43) Veröffentlichungstag der Anmeldung: **09.12.1998**
(21) Anmeldenummer: 98110355.9
(22) Anmeldetag: 05.06.1998
(51) Int. Cl.: C03B 37/018, C03C 17/00, C03C 17/22, C03C 17/245

(54) **Verstärkungslichtwellenleiter und Verfahren zu seiner Herstellung**

(30) Priorität: 06.06.1997 DE 19723833
(71) Anmelder: Alcatel Alsthom Compagnie Generale d'Electricité, 75088 Paris (FR)
(72) Erfinder: Weber, Dieter Dr., 70806 Kornwestheim (DE)
(74) Vertreter: Knecht, Ulrich Karl, Dipl.-Ing.

(57) **Zusammenfassung**

Es ist ein Verstärkungslichtwellenleiter (insbesondere für den Wellenlängenbereich bei 1300 nm) vorgeschlagen, mit dem eine hohe Verstärkung mit kleinstmöglicher Pumpleistung erzielt werden kann. In dem Kern des Verstärkungslichtwellenleiters sind aus einer Vielzahl von Komplexen bestehende Agglomerate eingebaut, wobei die Komplexe aus einem Seltenerdelement und einer Separatorsubstanz besteht.

## Beschreibung

Die Erfindung betrifft einen Verstärkungslichtwellenleiter, bestehend aus einem Lichtwellenleiterkern und einer Lichtwellenleiterhülle, bei dem das Volumen des Lichtwellenleiterkerns überwiegend aus einem Werkstoff mit guten Transmissionseigenschaften besteht, in welchem als Verstärkungswerkstoff Komplexe aus von einer Separatorsubstanz umhüllten Seltenerd-Ionen statistisch verteilt angeordnet sind.

Ein solcher Verstärkungslichtwellenleiter bzw. ein Verfahren zu seiner Herstellung ist bekannt (DE - A - 42 09 004). Bei dem bekannten Verstärkungslichtwellenleiter handelt es sich in erster Linie um solche, bei denen eine Verstärkung des Lichts im Wellenlängenbereich bei 1550 nm stattfindet. Solche Verstärkungslichtwellenleiter weisen einen günstiges Verhältnis zwischen Pumpleistung und Verstärkung auf. Wenn der Kern des Verstärkungslichtwellenleiters beispielsweise Erbium dotiert ist, kann mit einer Pumpleistung von 30 mW eine Verstärkung von 40 dB erzielt werden.

Um das gleiche Ergebnis bei einem Verstörkungslichtwellenleiter für den Wellenlängenbereich bei 1300 nm zu erzielen, dessen Kern beispielsweise mit Praseodym dotiert ist, ist eine Pumpleistung von 500 mW erforderlich. Das der Erfindung zugrunde liegende technische Problem besteht deshalb darin, einen Verstärkungslichtwellenleiter zu schaffen, bei dem eine möglichst hohe Verstärkung mit kleinstmöglicher Pumpleistung erzielt werden kann. Das gilt grundsätzlich für alle Arten von Verstärkungslichtwellenleiter, d. h. sowohl faserförmige Lichtwellenleiter als auch planare, auf einem Substrat angeordnete Lichtwellenleiter und für alle denkbaren Wellenlängenbereiche. Da insbesondere die Herstellung von Verstärkungslichtwellenleitern mit einer ausreichenden Verstärkung für den Wellenlängenbereich bei 1300 nm sehr erwünscht ist, soll ein solcher vorgeschlagen werden, bei dem für eine ausreichende Verstärkung eine Pumpleistung weit unter 100 nm benötigt wird. Bei den zu schaffenden Verstärkungslichtwellenleitern soll die Möglichkeit ausgeschlossen oder sehr stark reduziert sein, daß ein Teil der vom Pumplaser erzeugten Lichtleistung an die Phononen des Wirtsgitters abgegeben wird.

Dieses technische Problem ist erfindungsgemäß dadurch gelöst, daß der Verstärkungswerkstoff aus amorphen Agglomeraten einer Vielzahl von Komplexen besteht. Durch die Maßnahme gelingt es, eine möglichst große Anzahl von Seltenerd-Ionen in den Kern des Verstärkungslichtwellenleiters einzubauen, so daß diese bei einer gegebenen Pumpleistung optimal zur stimulierten Emission angeregt werden und eine kohärente Verstärkung von Licht erzielt wird.

Vorteilhafte Einzelheiten der Erfindung sind in den Ansprüchen 2 bis 9 enthalten. Sie ist nachstehend anhand der Figuren 1 bis 8 näher erläutert. Es zeigen:
- Fig. 1: eine zweidimensionale Darstellung des Komplexes,
- Fig. 2: eine schematische Darstellung eines Ausschnittes aus einem Verstärkungslichtwellenleiters mit Agglomeraten,
- Fig. 3: eine schematische Darstellung eines Agglomerates,
- Fig. 4: den Ausschnitt aus einem Verstärkungslichtwellenleiter mit einem Kern gemäß Fig. 2,
- Fig. 5: schematisch eine Vorrichtung zur Herstellung eines Agglomerate enthaltenden Verstärkungslichtwellenleiterkerns,
- Fig. 6: schematisch eine andere zur Herstellung eines Agglomerate enthaltenden Verstärkungslichtwellenleiterkerns,
- Fig. 7: schematisch eine Vorrichtung zur Herstellung eines Pulver-Gasgemisches und
- Fig. 8: schematisch eine Vorrichtung zur Herstellung eines Gasgemisches, welches Seltenerd-Ionen enthält.

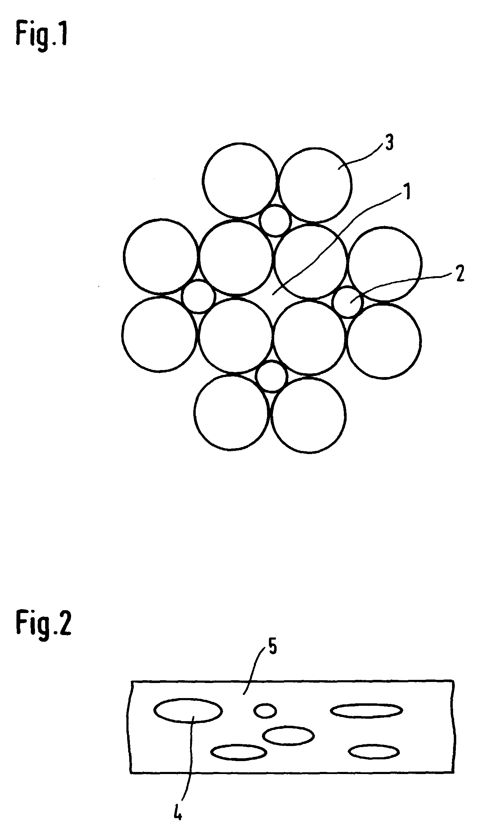

Der in Fig. 1 gezeigte Komplex besteht aus dem Seltenerd-Ion 1 im Zentrum, welches von einer Separatorsubstanz umgeben ist. Diese hat die Funktion, die Seltenerd-Ion optisch vo neinander zu isolieren. Wenn der Komplex in einen Verstärkungslichtwellenleiterkern eingebaut ist, dann ist das Seltenerd-Ion beispielsweise ein Erbiumion. Die Separatorsubstanz ist beispielsweise aus Aluminiumfluorid (AlF₃) entstanden, so daß das Seltenerd-Ion 1 von Aluminiumionen 2 und Fluorionen 3 umgeben ist.

Gemäß der Erfindung werden nun aus einer Vielzahl dieser Komplexe, beispielsweise aus mehreren tausend Kompexen, Agglomerate 4 oder Klumpen gebildet, welche ungleichmäßig d. h. statistisch verteilt in dem Werkstoff des Verstärkungslichtwellenleiterkerns 5 angeordnet sind, wie aus Fig. 2 zu erkennen ist. Ein solches Agglomerat hat beispielsweise einen Durchmesser von einigen hundert Nanometer oder mehr. Bei dem Werkstoff des Kerns 5 kann es sich um beispielsweise um einen für Lichwellenleiter üblicherweise verwendeteten Werkstoff, wie Siliziumdioxid (SiO₂), handeln, dessen Brechungsindex durch Dotierung mit einem anderen Werkstoff, beispielsweise Germaniumdioxid (GeO₂), angepaßt worden ist. Grundsätzlich sind aber als Kernwerkstoff auch andere Werkstoffe verwendbar.

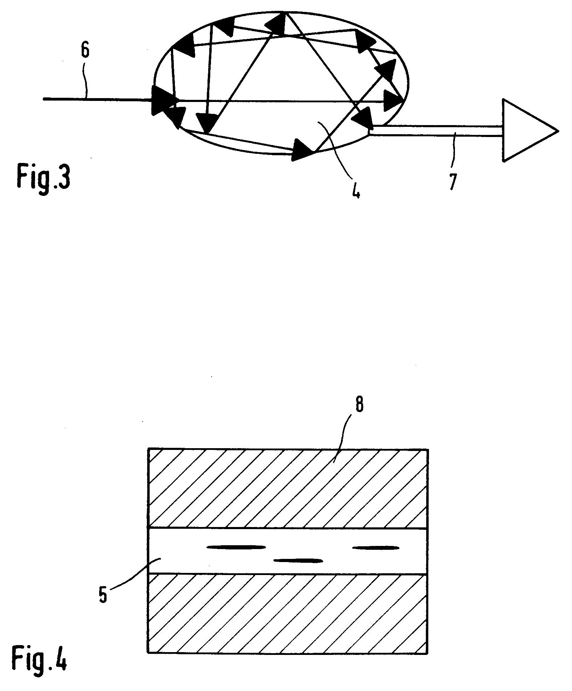

Anhand von Fig. 3, welche schematisch ein Agglomerat 4 zeigt, soll die Verstärkungswirkung des den Verstärkungslichtwellenleiterkern durchlaufenden Lichts verdeutlicht werden, wenn die Seltenerd-Ionen der Komplexe im Agglomerat 4 von einem Pumplaser angeregt werden. Das in das Agglomerat 4 eindringende Licht 6 wird in dem Agglomerat 4 mehrfach reflektiert und kann daher beim Durchdringen von mehreren Komplexen mehrfach verstärkt werden. Das verstärkte Licht 7 kann in den gepumpten Verstärkungslichtwellenleiterkern 5 nacheinander mehrere Agglomerate 4 durchlaufen und dort erneut verstärkt werden. Dadurch ergibt sich eine insgesamt höhere Verstärkung als bei den bekannten Verstärkungslichtwellenleitern.

Wenn der Kernwerkstoff und die Agglomerate amorph sind, weist die Wellenlängenbreite des verstärkten Lichts eine optimale Größe auf.

Fig. 4 zeigt die Seitenansicht eines Verstärkungslichtwellenleiters, welcher einen Kern 5 mit Agglomeraten 4 gemäß Fig. 2 aufweist. Der Kern 5 ist von der Lichtwellenleiterhülle 8 umgeben, welche - wie bei Lichtwellenleitern üblich - aus einem Werkstoff mit einem niedrigeren Brechungsindex als den Brechungsindex des Kern 5 besteht.

Bei dem Verstärkungslichtwellenleiter gemäß Fig. 4 kann es sich um einen fadenförmigen oder einen planaren Lichtwellenleiter handeln. Bei einem fadenförmigen Lichtwellenleiter umgibt die Lichtwellenleiterhülle 8 den Kern 5 konzentrisch. Bei einem planaren Lichtwellenleiter besteht die Lichtwellenleiterhülle 8 aus planaren Schichten zu beiden Seiten des beispielsweise streifenförmigen Kerns 5.

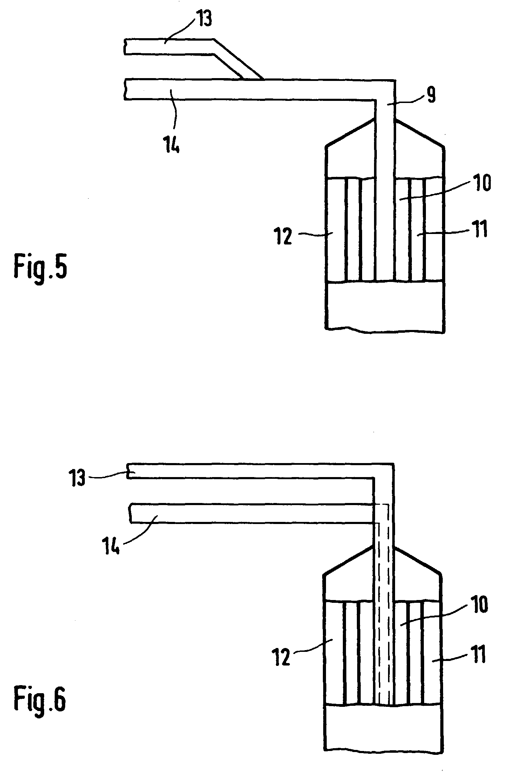

Fig. 5 zeigt die Ausführungsform einer Vorrichtung, mit der ein Lichtwellenleiterkern mit Agglomeraten hergestellt werden kann. Sie enthält einen an sich bekannten Knallgasbrenner, mit dem Schichten aus Glas oder poröse Glasschichten nach dem Flammhydrolyse-Verfahren hergestellt werden können.

Derartige Vorrichtungen sind aus der DE-A-28 35 326 bekannt. Sie bestehen aus mehreren konzentrisch zueinander angeordneten Rohren, wobei dem Brenner mit dem im Zentrum angeordneten Rohr 9 der Werkstoff zugeführt wird, aus dem die herzustellende Glasschicht erzeugt wird. Mit dem Rohr 10 wird in der Regel Sauerstoff und mit dem Rohr 11 Wasserstoff zugeführt. Das Rohr 12 führt ein inertes Gas, beispielsweise Argon, welches mehrere Funktionen hat, beispielsweise den Strom der Brennergase nach außen abzuschirmen und zu kühlen.

Bei der aus Fig. 5 ersichtlichen Vorrichtung wird das Rohr 9 von den zwei Rohren 13 und 14 gespeist. Durch das Rohr 13 werden beispielsweise die Ausgangsstoffe des Kernglases in gasförmiger Form zugeführt, beispielsweise Siliziumtetrachlorid und Germaniumtetrachlorid zusammen mit Argon. Durch das Rohr 14 werden die Ausgangstoffe für die Erzeugung der Agglomerate zugeführt.

Für die Zuführung der Agglomeratwerkstoffe gibt es zwei Möglichkeiten. Einerseits können die Werkstoffe, aus denen die Komplexe entstehen, d. h. der Seltenerd-Werkstoff und der Separatorwerkstoff gasförmig zusammen mit einem Gas, wie Argon, zugeführt werden. Die Komplexe bzw. die Agglomerate können aber auch als feines Pulver in einem Gasstrom, welches ebenfalls aus Argon besteht, in den Brenner eingeführt werden.

Die in Fig.6 gezeigte Vorrichtung unterscheidet sich von der Vorrichtung in Fig. 5 dadurch, daß die Rohre 13 und 14 koaxial zueinander angeordnet in den Knallgasbrenner geführt sind. Die Bestandteile der Vorrichtung, welche mit den Bestandteilen der Vorrichtung gemäß Fig. 5 identisch sind, haben die gleichen Bezugszeichen.

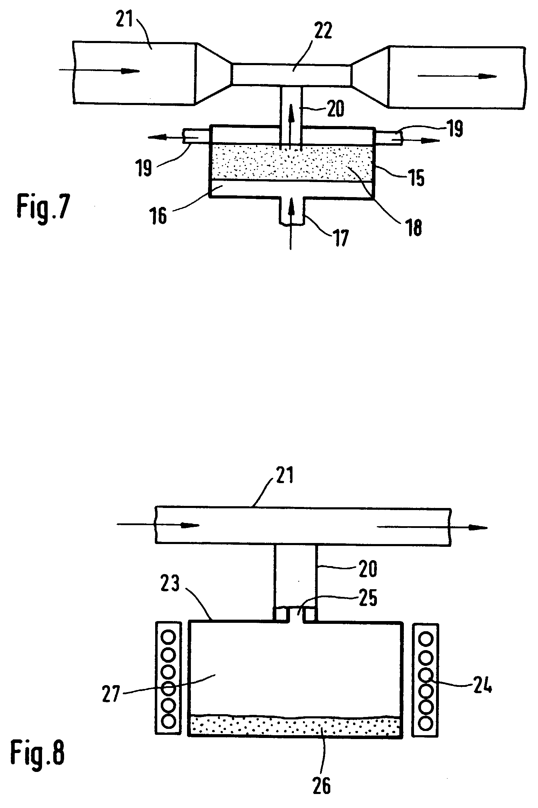

In Fig. 7 ist eine Vorrichtung gezeigt, welche dafür geeignet ist, um aus einem feinen Pulver (d < 0,2 µm) ein Fluid zu erzeugen, welches in einem Gasstrom dem Knallgasbrenner zugeführt werden kann. Die Vorrichtung enthält einen Behälter 15, in dem oberhalb eines gasdurchlässigen Bodens 16 der pulverförmige Werkstoff angeordnet ist. Die Unterseite des Behälters 15 ist mit einem Rohranschluß 17 versehen, über den ein Gas zugeführt wird. Dieses Gas durchdringt die Pulverschicht 18 im Behälter 16 und wird über die Gasauslässe 19 abgeführt. In der Pulverschicht 18 taucht ein Rohr 20 ein, welches in dem Rohr 21 mündet, das den Gasstrom führt, in dem das Pulver-Gas-Gemisch dem Knallgasbrenner zugeführt werden soll.

An der Engstelle 22 des Rohres 21 ist ein Unterdruck vorhanden, welcher bewirkt, daß Teile des Fluids im Behälter 15 angesaugt und von dem Gasstrom im Rohr 21 mitgerissen werden.

Fig. 8 zeigt eine Vorrichtung, mit welcher die Ausgangsstoffe der Agglomerate gasförmig erzeugt werden können, um bei der Herstellung des Lichtwellenleiterkerns zusammen mit dessen Ausgangsstoffen verglast zu werden. Diese Vorrichtung besteht aus einem druckfesten Behälter 23, welcher mit einer Heizung 24 versehen ist. Am oberen Ende des Behälters 23 ist eine sehr kleine Öfffnung 25, welche in einem Rohr 20 mündet. Das Rohr 20 mündet seinerseits in dem Rohr 21. Rohre 20 und 21 entsprechen denen der Vorrichtung gemäß Fig. 7. Auf dem Boden des Behälters 23 befinden sich die Ausgangswerkstoffe für die Erzeugung der Komplexe bzw. Agglomerate. Bei der Vorrichtung in Fig. 8 handelt es sich um eine sogenannte Knudsen-Zelle, wie sie auch in der DE-A-42 09 004 beschrieben ist.

Die gasförmigen Werkstoffe für die Komplexe bzw. die Agglomerate werden auf folgende Weise erzeugt: Bei den im Behälter 23 befindlichen Stoffen handelt es sich beispielsweise um Erbiumchlorid und Aluminiumchlorid. Wenn der Behälter 23 beispielsweise auf eine Temperatur von ca. 800° C aufgeheizt wird, dann entsteht wegen des leicht flüchtigen Aluminiums ein hoher Druck. Durch die sehr kleine Öffnung 25, welche einen Durchmesser von etwa 100 bis 200 µm besitzt, kann das über dem Feststoffgemisch 26 liegende Gas 27 der Zusammensetzung Erbiumchlorid/Aluminiumchlorid durch die Öffnung entweichen. Je nach Größe der Öffnung 25 entstehen dabei Agglomerate von hundert oder mehr Einzelmolekülen. Die Agglomerate werden von dem Gasstrom in dem Rohr mitgerissen, zur Verglasungsstelle des Kernglaswerkstoffes transportiert und dort in das Kernglas eingebaut.

## Patentansprüche

1. Verstärkungslichtwellenleiter bestehend aus einem Lichtwellenleiterkern und einer Lichtwellenleiterhülle, bei dem das Volumen des Lichtwellenleiterkerns überwiegend aus einem Werkstoff mit guten Transmissionseigenschaften besteht, in welchem als Verstärkungswerkstoff Komplexe aus von einer Separatorsubstanz umhüllten Seltenerd-Ionen statistisch verteilt angeordnet sind,
**dadurch gekennzeichnet,**
daß der Verstärkungswerkstoff aus amorphen Agglomeraten einer Vielzahl von Komplexen besteht.

2. Verstärkungslichtwellenleiter nach Anspruch 1, dadurch gekennzeichnet, daß das Agglomerat aus mehr als tausend Einzelmolekülen besteht und einen Durchmesser zwischen 10⁻⁹ und 10⁻⁶ m aufweist.

3. Verstärkungslichtwellenleiter nach den Ansprüchen 1 und 2, dadurch gekennzeichnet, daß die Seltenerd-Ionen aus Elementen entsprechend des zu verstärkenden Wellenlängenbereiches, wie Erbium oder Neodym bzw. Praseodym bestehen.

4. Verstärkungslichtwellenleiter nach den Ansprüchen 1 bis 3, dadurch gekennzeichnet, daß die Separatorsubstanz aus einer Aluminiumverbindung besteht.

5. Verstärkungslichtwellenleiter nach den Ansprüchen 1 bis 3, dadurch gekennzeichnet, daß die Separatorsuchstanz aus einer Lanthanverbindung besteht.

6. Verstärkungslichtwellenleiter nach den Ansprüchen 1 bis 3, dadurch gekennzeichnet, daß die Differenz zwischen den Brechungsindizes des Transmissionswerkstoffes und des Verstärkungswerkstoffes ca. 40 x 10⁻³ beträgt.

7. Verfahren zur Herstellung des Kerns eines planaren Verstärkungslichtwellenleiters nach wenigstens einem der Ansprüche 1 bis 6, dadurch gekennzeichnet, daß ein Gemisch aus Pulvern des Kernwerkstoffes und des Verstärkerwerkstoffes mittels eines Trägergasstromes in einem Knallgasbrenner eingeleitet und von diesem auf einem Substrat abgeschieden wird, die derart abgeschiedene Schicht erforderlichenfalls nachgesintert und aus ihr die Lichtwellenleiterkernschicht strukturiert wird.

8. Verfahren zur Herstellung des Kerns eines planaren Verstärkungslichtwellenleiters nach wenigstens einem der Ansprüche 1 bis 6, dadurch gekennzeichnet, daß die gasförmigen Ausgangswerkstoffe des Kernwerkstoffs zusammen mit dem pulverförmigen Verstärkerwerkstoff in einen Knallgasbrenner eingeleitet und von diesem als poröse Schicht auf einem Substrat abgeschieden werden, die derart abgeschiedene Schicht zu Glas gesintert und aus ihr die Lichtwellenleiterkernschicht strukturiert wird.

9. Verfahren zur Herstellung des Kerns eines faserförmigen Verstärkungslichtwellenleiters nach wenigstens einem der Ansprüche 1 bis 6, dadurch gekennzeichnet, daß die Ionen des Seltenerdwerkstoffes gemeinsam mit der Seporatorsubstanz und dem Kernausgangswerkstoff gasförmig in ein Quarzglasrohr eingeleitet und dort als glasige Schicht durch reaktive Abscheidung aus der Gasphase auf der Innenwand niedergeschlagen werden.
